# EUROPEAN PATENT SPECIFICATION

(11) **EP 2 407 892 B1**
(45) Date of publication and mention of the grant of the patent: **19.02.2020**
(21) Application number: 10169543.5
(22) Date of filing: 14.07.2010
(51) Int. Cl.: G06F 3/0481, G06F 3/0485, G06F 3/0488

(54) **Portable electronic device and method of controlling same**
Tragbare elektronische Vorrichtung und Kontrollverfahren dafür
Dispositif électronique portable et son procédé de commande

(43) Date of publication of application: 18.01.2012
(73) Proprietor: BlackBerry Limited, Waterloo, ON N2K 0A7 (CA)
(72) Inventor: Boka, Arthur, Carol, Waterloo Ontario N2L 3W8 (CA); Lee, John, Jong-Suk, Waterloo Ontario N2L 3L3 (CA); Mujkic, Alen, Mississauga Ontario L4W OB4 (CA); Langlois, Michael, George, Kanata Ontario K2K 3K2 (CA)
(74) Representative: Vigand, Philippe

(56) References cited:
- EP-A1- 2 075 682
- EP-A1- 2 192 479
- US-A1- 2005 162 402
- US-A1- 2009 167 700
- US-B1- 6 278 443

## Description

### FIELD OF TECHNOLOGY

The present disclosure relates to a portable electronic device including a touch screen display and control of the electronic device.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

EP 2075682 discloses a method of operating a handheld electronic device having a touch screen display, in which an operating interface displayed on a touch screen of the handheld electronic device is used to operation a function module of the handheld electronic device.

US 2009/167700 discloses a computer-implemented method performed at a portable electronic device that includes displaying graphics on a touch screen display of the portable electronic device, detecting finger contact on the touch screen display, and in response to the detected finger contact, inserting an insertion marker in the graphics at a first location. The method can further include detecting a finger movement on the touch screen display, and irrespective of the initial distance from the finger to the insertion marker, moving the insertion maker in accordance with the detected finger movement from the first location to a second location.

EP 2192479 discloses a method of controlling a portable electronic device that has a touch screen display including providing a graphical user interface on the touch screen display, detecting a touch event at a first location on the touch screen display, providing a navigation indicator in the graphical user interface in response to detecting the touch event at the first location, and in response to detecting movement of the touch event from the first location to a second location while touch contact is maintained on the touch screen display, changing the position of the navigation indication in the graphical user interface by a distance that is greater than a distance of movement of the touch event on the touch screen display.

US 6278443 B1 discloses a computer controlled display system with a user interactive touchscreen, with an on-screen mouse to which user input may be applied.

Improvements in electronic devices with touch-sensitive or touchscreen devices are desirable.

### SUMMARY

A method includes displaying information in a first area of a touch-sensitive display of an electronic device, detecting invocation of a controller, and displaying the controller in a second area of the touch-sensitive display, detecting a touch associated with the second area, detecting a change of a location of the touch associated with the second area, and in response to detecting a change in the location of the touch, moving an indicator within the information based on one of a multiple and fraction of a distance the touch is moved to control the indicator within the information. A portable electronic device includes a touch-sensitive display configured to display information and a processor operably coupled to the touch-sensitive display to detect invocation of a controller, display the controller on the touch-sensitive display, detect a touch associated with the second area, detect a change of a location of the touch associated with the second area, and in response to detection of a change in the location of the touch, move an indicator within the information based on one of a multiple and fraction of a distance the touch is moved to control the indicator within the information.

The invention is defined by the features laid down in the independent claims 1, 12 and 13. Further enhancements are provided by the dependent claims.

### BRIEF DESCRIPTION OF THE DRAWINGS

FIG. 1 is a block diagram of a portable electronic device in accordance with the present disclosure.
FIG. 2 is a flowchart illustrating a method of controlling a portable electronic device in accordance with the present disclosure.
FIG. 3 illustrates an example of an electronic device before and during display of a controller in accordance with the present disclosure.
FIG. 4 and FIG. 5 illustrate examples of an electronic device before and after controlling an indicator in accordance with the present disclosure.
FIG. 6 illustrates another example of an electronic device before and during display of a controller in accordance with the present disclosure.
FIG. 7 illustrates another example of an electronic device before and after controlling an indicator in accordance with the present disclosure.
FIG. 8 illustrates another example of an electronic device display of a controller in accordance with the present disclosure.

### DETAILED DESCRIPTION

The following describes an electronic device and a method including displaying information in a first area of a touch-sensitive display of an electronic device, detecting invocation of a controller, and displaying the controller in a second area of the touch-sensitive display to control an indicator within the information.

For simplicity and clarity of illustration, reference numerals may be repeated among the figures to indicate corresponding or analogous elements. Numerous specific details are set forth to provide a thorough understanding of the embodiments described herein. The embodiments may be practiced without these specific details. In other instances, well-known methods, procedures, and components have not been described in detail so as not to obscure the embodiments described herein. The description is not to be considered as limited to the scope of the embodiments described herein.

The disclosure generally relates to an electronic device, which in the embodiments described herein is a portable electronic device. Examples of portable electronic devices include mobile, or handheld, wireless communication devices such as pagers, cellular phones, cellular smart-phones, wireless organizers, personal digital assistants, wirelessly enabled notebook computers, and the like. The portable electronic device may also be a portable electronic device without wireless communication capabilities such as a handheld electronic game device, digital photograph album, digital camera, or other device.

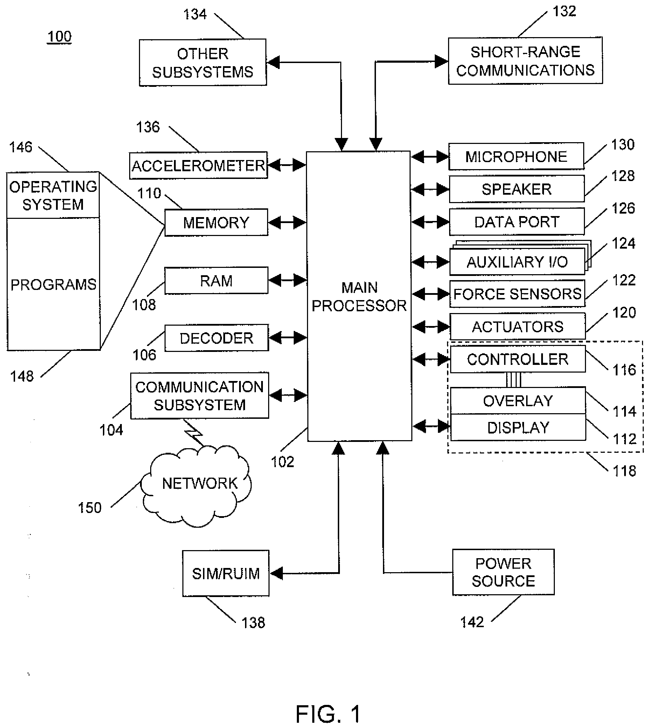

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and dual-mode networks that support both voice and data communications. A power source 142, such as one or more rechargeable batteries or a port to another power supply, powers the portable electronic device 100.

The processor 102 interacts with other devices, such as a Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into the memory 110.

The portable electronic device 100 also includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O-subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, or surface acoustic wave (SAW) touch-sensitive display, as known in the art. A capacitive touch-sensitive display includes the display 112 and a capacitive touch-sensitive overlay 114. The overlay 114 may be an assembly of multiple layers in a stack including, for example, a substrate, LCD display 112, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118 and processed by the processor 102, for example, to determine attributes of the touch including the touch location. Touch location data may include a single point of contact, such as a point at or near a center of the area of contact, or the entire area of contact for further processing. The location of a touch detected on the touch-sensitive display 118 may include x and y components, e.g., horizontal and vertical with respect to one's view of the touch-sensitive display 118, respectively. For example, the x location component may be determined by a signal generated from one touch sensor layer, and the y location component may be determined by a signal generated from another touch sensor layer. A signal is provided to the controller 116 in response to detection of a suitable object, such as a finger, thumb, or other items, for example, a stylus, pen, or other pointer, depending on the nature of the touch-sensitive display 118. Multiple touches may occur simultaneously and may be detected as separate touches. Optionally, multiple touches may be determined to be multiple touches based on attributes including the size of the touch, for example, where two touches are very close together and are not otherwise detected as multiple touches.

The actuator 120 may be depressed by imparting sufficient force to the touch-sensitive display 118 to overcome the actuation force of the actuator 120. The actuator 120 may be actuated by pressing anywhere on the touch-sensitive display 118. Input may be provided to the processor 102 when the actuator is actuated. Actuation of the actuator 120 provides the user with tactile feedback.

Optionally, a mechanical dome switch actuator may be utilized to provide tactile feedback when the dome collapses due to imparted force and when the dome returns to the rest position after release of the switch.

Alternatively, the actuator 120 may comprise one or more piezoelectric (piezo) actuators that provide tactile feedback. Contraction of the piezo actuator(s) imparts a spring-like force against the touch-sensitive display 118, opposing any force externally imparted on the display 118. Each piezo actuator 120 includes a piezoelectric device, such as a piezoelectric ceramic disk adhered to a substrate, such as a metal substrate. The substrate bends when the piezoelectric device contracts diametrically due to build up of charge/voltage at the piezoelectric device or in response to an external force imparted on the touch-sensitive display 118. The charge/voltage may be adjusted by varying the applied voltage or current, thereby controlling the force imparted on the piezoelectric devices on the touch-sensitive display 118. The charge/voltage on the piezo actuator may be removed by a controlled discharge current/voltage that causes the piezoelectric device to expand diametrically, releasing the force thereby decreasing the force imparted on the piezo actuator on the touch-sensitive display 118. The charge/voltage may advantageously be removed over a relatively short period of time to provide tactile feedback to the user. Absent an external force imparted on the touch-sensitive display 118 and absent a charge/voltage on the piezoelectric device, the piezoelectric device may be slightly bent due to a mechanical preload.

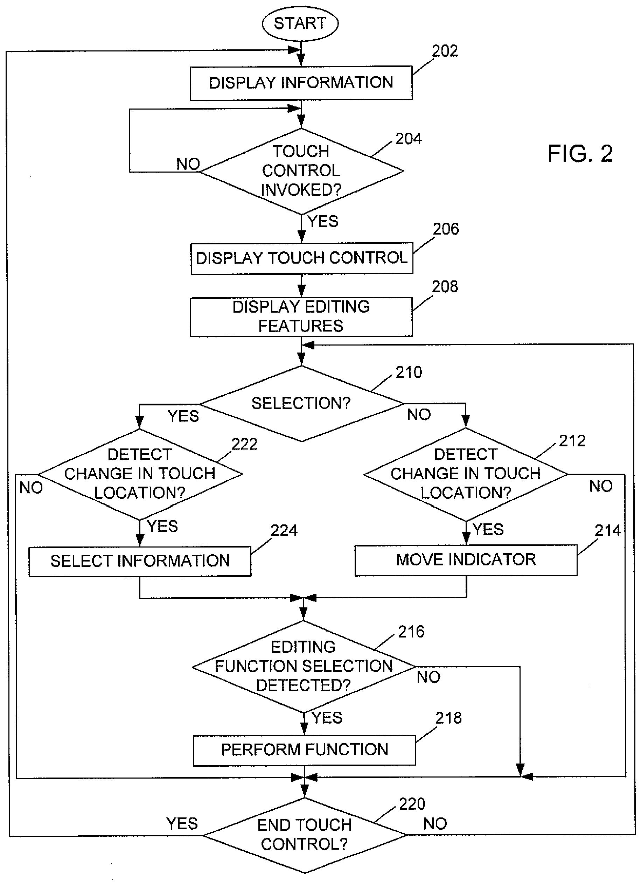

A flowchart illustrating a method of controlling an electronic device 100 is shown in FIG. 2. The method may be carried out by computer-readable code executed, for example, by the processor 102. Computer-readable code executable by at least one processor of the portable electronic device to perform the method may be stored in a computer-readable medium. Coding of software for carrying out such a method is within the scope of a person of ordinary skill in the art given the present description. The flowchart of FIG. 2 is simplified for the purpose of explanation. The method may contain additional or fewer processes than shown and/or described, and may be performed in a different order.

Information is displayed 202 on the touch-sensitive display 118 of the portable electronic device 100. The information may be information from a program or application, such as a web browser, contacts, email, calendar, music player, spreadsheet, word processing, operating system interface, and so forth. The information may be updated at various times, and the display of the information is ongoing.

When invocation of a controller for an indicator is detected 204, the controller is displayed 206 on the touch-sensitive display 118. Invoking the controller may be detected by, for example, detecting selection of an option from a menu or submenu, detecting a key or combination of keys displayed on a keyboard, an icon, detecting a gesture, such as a specific type of gesture in a given location, e.g., a downward diagonal swipe through information such as text, or any other suitable method. The controller is displayed on the touch-sensitive display 118 without covering or displacing the displayed information. The touch-sensitive display 118 may be, for example, split between an information or display area, in which the information or part of the information is displayed, and a control area that is a touch-sensitive area utilized for controlling an indicator within the information and optionally other controls. Selectable editing features that correspond to editing functions, such as cut, copy, paste, underline, italicize, and bold, may also be displayed 208 in the controller area.

When a selection process is entered at 210, the process continues at 222. The selection process may be entered, for example, by detection of selection of a key or keys, a virtual feature such as a key or icon, an option from a menu, or submenu list of options, or by detection of depression of the touch-sensitive display causing actuation of the actuator 120.

When the selection process is not entered at 210 and a change in a touch location is detected 212, an indicator that is displayed within the information, is moved 214. The direction of movement of the touch on the controller is determined and the indicator is moved 214 in a corresponding direction. When the touch moves from right to left, the indicator moves from right to left. When the touch moves from left to right, the indicator moves from left to right. The touch and indicator may also move in an upward direction, a downward direction, diagonally, or in any other suitable direction with respect to the display 118.

When an editing function selection is detected 216, the corresponding function is performed 218 and information is edited accordingly. For example, upon detection of a paste option, previously cut or copied information may be pasted at the location of the indicator. When selection of an editing feature is not detected 216, e.g., due to passage of time or detection of input to exit the selection process, and a selection of an option to exit the controller is detected at 220, the process continues at 202. The option to exit the controller may be an option in a menu or submenu, a key, an icon, detecting a gesture, such as a specific type of gesture in a given location, e.g., an upward diagonal swipe through information such as text, or any other suitable method. When a selection of the option to exit the controller is not received 220, e.g., due to passage of time, the process continues at 210.

When the selection process begins at 210 and a change in a touch location is detected at 222, information may be selected 224. Information is selected 224, e.g., beginning at the location of the indicator prior to the movement of the touch, referred to as the original location of the indicator. The end of the selection may be anywhere within the information and is dependent, e.g., on the direction of movement of the touch on the controller and the extent, or amount of information selected, is dependent on the extent of the movement of the touch, or the end location of the touch, as described in the following examples. When the touch moves from right to left, the information to the left of the original location of the indicator is selected. When the touch moves from left to right, the information to the right of the original location of the indicator is selected. Information may also be selected from movement of the touch in an upward direction, a downward direction, diagonally, or in any other suitable direction while touch contact is maintained.

Selection of an editing feature may be detected 216 and the information edited 218. Examples of editing feature selections that may be received include cut, copy, paste, underline, bold, italicize, and so forth.

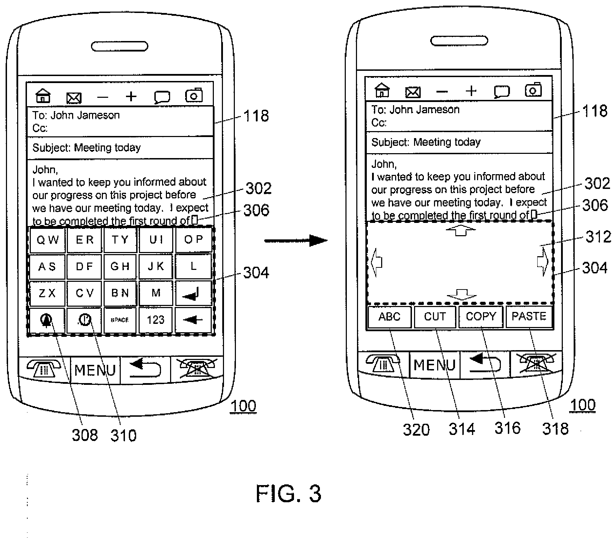

An example of an electronic device before and during display of a controller is shown in FIG. 3. In the example of FIG. 3, the portable electronic device 100 is utilized for composing and sending an email utilizing an email program or application. The email program or application may be run directly on the portable electronic device 100 or through a browser. When in the email program, information entered by the user is displayed in the display area 302 on the touch-sensitive display 118, and a virtual keyboard is displayed in the control area 304, below the information in this example. The terms below, above, and beside are utilized herein with reference to the orientation of the information is rendered on the touch-sensitive display 118 and are not otherwise limiting. The virtual keyboard includes keys for entry of alphanumeric characters, punctuation, or symbols for composing the email and is a reduced keyboard in which at least some of the keys are associated with multiple alphabetical letters. Optionally, the keyboard may be a full keyboard in which each alphabetical letter is associated with a respective key. The information includes information in email header fields such as a "To" field, a "Cc" field, a "Subject" field and a body field. The information in the fields of the email may be edited during composition of the email, and an indicator 306 is shown displayed in the information. The indicator 306 indicates the position, within the information, at which edits, additions, and deletions may be made.

When the controller is invoked, for example, when two touches 308, 310 are detected on the touch-sensitive display 118, at locations that correspond to a shift key and symbol key, as shown in the left illustration of FIG. 3. The controller 312 is displayed in the control area 304 on the touch-sensitive display 118 where the keyboard was displayed. In addition to the controller 312, editing features are displayed below the controller 312. The editing features include a cut key 314, a copy key 316, and a paste key 318. An exit key 320 is also provided to exit the controller 312 and display the keyboard. The controller 312, the editing features 314, 316, 318, and the exit key 320 replace the keyboard, as shown left illustration of FIG. 3. Selection of the exit key 320 exits the controller 312, the editing features 314, 316, 318, and exit key 320 and the keyboard is displayed in the control area 304. The controller 312 is displayed without covering or displacing the information in the display area 302. The area of the touch-sensitive display 118 in which the information is displayed may be sized to accommodate display of the controller and may be expanded when the controller is displayed, depending on the size of the controller 312 relative to the size of the keyboard.

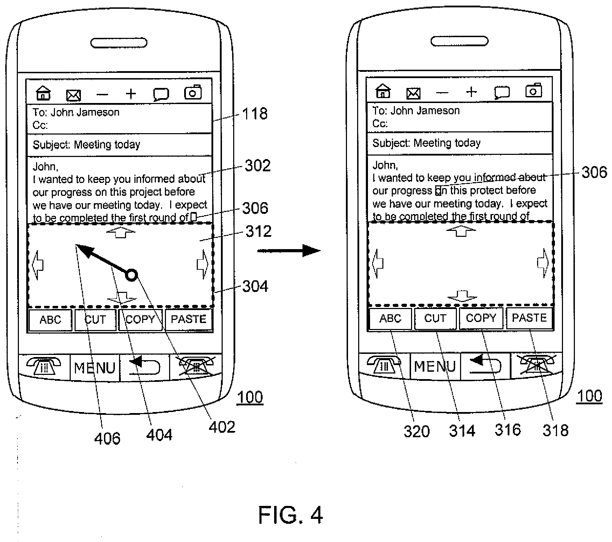

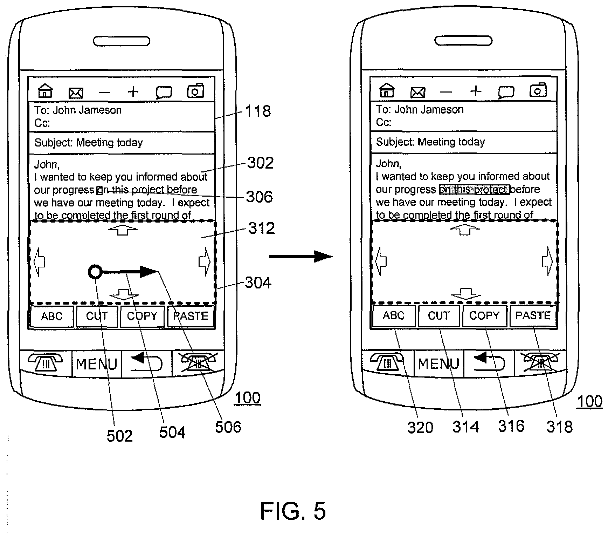

Examples of an electronic device before and after controlling an indicator utilizing the controller 312 are illustrated in FIG. 4 and FIG. 5. In the example of FIG. 4, a touch 402 is detected on the controller 312. The portable electronic device 100 does not enter the selection process and movement of the touch is detected. The direction of movement of the touch is up and to the left as illustrated by the arrow 404. The endpoint 406 of the arrow 404 indicates the end point of the movement of the touch 402, as shown in the left illustration of FIG. 4. The indicator 306 is moved up and to the left by a corresponding distance within the information, as shown in the right illustration of FIG. 4. The editing features 314, 316, 318 may be selected. Alternatively, the exit key 320 may be selected.

In the example of FIG. 5, a touch 502 is detected on the controller 312. The portable electronic device 100 begins the selection process in response to depression of the touch-sensitive display 118 and actuation of the actuator 120. Movement of the touch is detected and the direction of movement of the touch is to the right as illustrated by the arrow 504. The endpoint 506 of the arrow 504 indicates the end point of the movement of the touch 502, as shown in the left illustration of FIG. 5. Text is selected from the original location of the indicator and ending to the right at a distance from the original location that corresponds with the distance that the touch is moved, as shown in the right illustration of FIG. 5. The endpoints may be optionally selected and moved in any implementation. The editing features 314, 316, 318 may be selected to edit the selected information. Alternatively, the exit key 320 may be selected, for example, to type over the selected information. The distance between the original location of the indicator and the end of the selection may be equivalent to the distance that the touch is moved.

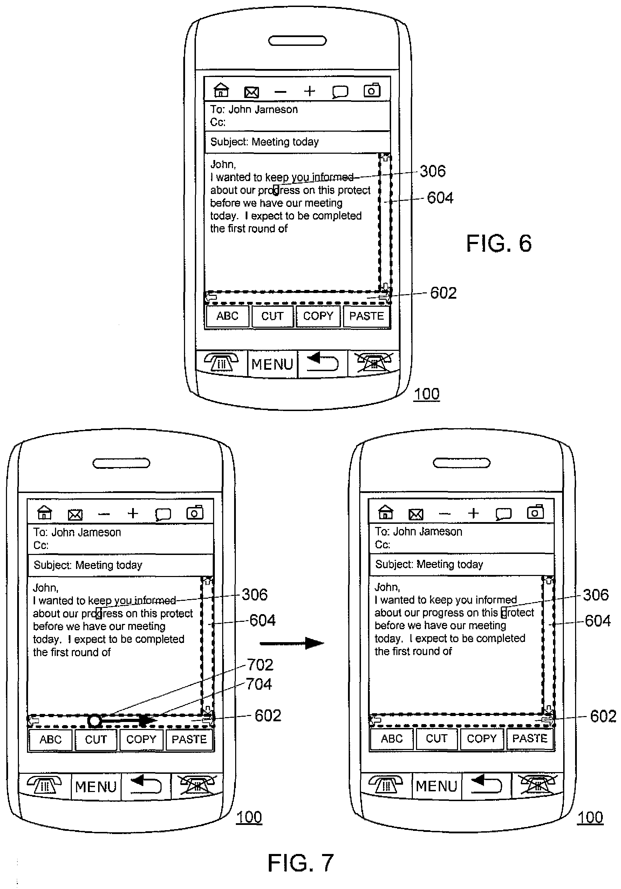

Another example of an electronic device displaying a controller is shown in FIG. 6. A selection of an option to invoke the controller is received and two controllers 602, 604 are displayed, one below (or optionally above) the information and one to either side of the information on the touch-sensitive display 118.

In addition to the controllers 602, 604 editing features as described above, may be displayed below the controller 602. The controller 602 is displayed as a thin horizontal band that extends below the displayed information and is utilized to control horizontal movement of the indicator 306. The controller 604 is displayed as a thin vertical band that extends beside the displayed information and is utilized to control vertical movement of the indicator 306. The controllers 602, 604 are displayed without covering the information, and the display area for the information is expanded, compared to when the keyboard is displayed.

An example of an electronic device before and after controlling an indicator utilizing the controller 602 is illustrated in FIG. 7. In the example of FIG. 7, a touch 702 is detected on the horizontal controller 602. Movement of the touch is detected without entering the selection process. The direction of movement of the touch is to the left as illustrated by the arrow 704. The endpoint 706 of the arrow 704 indicates the endpoint of the movement of the touch 702, as shown in the left illustration of FIG. 7. The indicator 306 is moved to the left within the information, as shown in the right illustration of FIG. 7. The indicator is moved by a touch and by movement of the touch at the controllers 602, 604 that are spaced from the indicator and do not interfere with, displace, or cover the displayed information.

The indicator may be moved vertically utilizing the controller 604. The selection process may also be entered to select information. Optionally, the controllers 602, 604 may be displayed when information is displayed, rather than in response to detecting invocation of a controller.

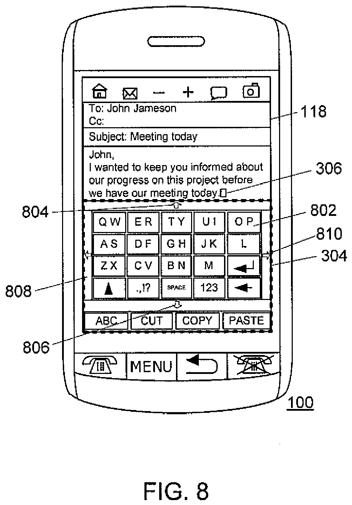

Another example of an electronic device 100 is illustrated in FIG. 8. In the example of FIG. 8, a virtual keyboard 802 is displayed in one area 304, along with the controllers 804, 806, 808, 810 upon detection of invocation of the controllers. The controllers are displayed as thin horizontal and vertical bands that include an up controller 804, a down controller 806, a left controller 808, and a right controller 810. Two of the controllers 804, 806 are thin bands that extend above and below the keyboard 802 and are utilized to control vertical movement of the indicator 306. Two of the controllers 808, 810 are thin bands that extend beside the keyboard 802 and are utilized to control horizontal movement of the indicator 306. The controllers 804, 806, 808, 810 are displayed without covering the information or the keyboard 802, and the area of the touch-sensitive display 118 in which the information is displayed is sized to accommodate display of the controllers 804, 806, 808, 810. A slide, tap, or other selection associated with an area of one of the controllers 804, 806, 808, 810 selects that controller and performs the associated function. Optionally, the controllers 804, 806, 808, 810 may be displayed in the outer perimeter of the area where the text is displayed, e.g., as four small squares in the corners of the information area, to facilitate allocation of more screen area for information display.

The distance that the indicator is moved may be equivalent to the distance that the touch is moved. Optionally, the distance that the indicator is moved may be a multiple or a fraction of the distance that the touch is moved or may be based on time of movement of the touch. Thus, coarse and fine control of the indicator may be provided for any implementation.

The method of the portable electronic device facilitates control of an indicator utilized for editing information on a touch-sensitive display and provides an improved interface. An indicator may be utilized for editing, adding, and deleting information. Further, the indicator may be utilized to select information for cutting, copying, pasting, underlining, bolding, italicizing, moving, deleting, and/or other functions. Display of a controller facilitates fine control of movement of the indicator, to facilitate accurate location of the indicator and/or accurate selection of information. The controller controls the indicator and is spaced from the indicator on the touch-sensitive display 118. Fine control of the indicator may decrease device use time and power requirements during movement of the indicator and selection of information. The controller provides a large area for easily and accurately moving an indicator such as a cursor and for selecting text. The controller facilitates ease, speed, and accuracy of indicator movement and text selection during editing of information on the touch-sensitive display.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

## Claims

1. A method comprising:
displaying information in a first area of a touch-sensitive display (118) of an electronic device (100);
detecting invocation of a controller;
displaying the controller in a second area of the touch-sensitive display (118) without covering or displacing the displayed information in the first area (302);
detecting a touch associated with the second area;
detecting movement of the touch associated with the second area; and
in response to detecting movement of the touch, moving an indicator within the information in a corresponding direction based on one of a multiple and fraction of a distance the touch is moved to control the indicator within the information **characterized in that**;
the method further comprising displaying, in the second area of the touch-sensitive display, selectable editing features associated with editing the displayed information;
wherein, when selection of a selectable editing feature is detected, a corresponding editing function is performed (218) and the displayed information is edited accordingly.

2. The method according to claim 1, wherein a direction of movement of an indicator is dependent on the direction of movement of the touch associated with the second area.

3. The method according to any one of claims 1 or 2, comprising selecting at least some of the information in response to detecting movement of the touch on the second area.

4. The method according to claim 3, wherein the at least some of the information is dependent on the direction of movement.

5. The method according to any one of claims 1 to 4, wherein the indicator comprises at least one of a cursor and highlighting.

6. The method according to any one of claims 1 to 5, wherein the information comprises alphanumeric characters.

7. The method according to any one of claims 1 to 6, wherein the controller is displayed adjacent to the information.

8. The method according to any one of claims 1 to 7, wherein the area of the touch-sensitive display (118) where the information is displayed is limited to accommodate display of the controller.

9. The method according to any one of claims 1 to 8, wherein the controller replaces at least part of a virtual keyboard.

10. The method according to any one of claims 1 to 9, wherein displaying a controller comprises displaying a first controller and displaying a second controller.

11. The method according to any one of claims 1 to 9, wherein displaying a controller comprises displaying a horizontal controller to control horizontal movement of the indicator and displaying a vertical controller to control vertical movement of the indicator.

12. A computer-readable medium having computer-readable code executable by at least one processor of an electronic device to perform the method of any one of claims 1 to 11.

13. An electronic device (100) comprising:
a touch-sensitive display (118) configured to display information in a first area (302);
a processor operably coupled to the touch-sensitive display to detect invocation of a controller, display the controller in a second area of the touch-sensitive display without covering or displacing the displayed information in the first area (302), detect a touch associated with the second area, detect movement of the touch associated with the second area, and in response to detection of movement of the touch, move an indicator within the displayed information based on one of a multiple and fraction of a distance the touch is moved to control the indicator within the information, **characterized in that**;
the processor being further configured to:
display, in the second area of the touch-sensitive display, selectable editing features associated with editing the displayed information; and
when selection of a selectable editing feature is detected, perform (218) a corresponding editing function to edit the displayed information accordingly.

## Patentansprüche

1. Verfahren, umfassend:
Anzeigen von Information in einem ersten Bereich einer berührungsempfindlichen Anzeige (118) einer elektronischen Vorrichtung (100);
Erkennen des Aufrufs einer Steuerung;
Anzeigen der Steuerung in einem zweiten Bereich der berührungsempfindlichen Anzeige (118), ohne die angezeigte Information im ersten Bereich (302) zu überdecken oder zu verschieben;
Erkennen einer Berührung, die mit dem zweiten Bereich assoziiert ist;
Erkennen einer Bewegung der Berührung, die mit dem zweiten Bereich assoziiert ist; und
in Reaktion auf das Erkennen der Bewegung der Berührung, Bewegen eines Indikators innerhalb der Information in einer entsprechenden Richtung basierend auf einem von einem Mehrfachen oder einem Bruchteil einer Distanz, über die die Berührung bewegt wird, zum Steuern des Indikators innerhalb der Information, **dadurch gekennzeichnet, dass**;
das Verfahren ferner das Anzeigen, im zweiten Bereich der berührungsempfindlichen Anzeige, von auswählbaren Bearbeitungsmerkmalen umfasst, die mit dem Bearbeiten der angezeigten Information assoziiert sind;
wobei, wenn die Auswahl eines auswählbaren Bearbeitungsmerkmals erkannt wird, eine entsprechende Bearbeitungsfunktion ausgeführt (218) und die angezeigte Information entsprechend bearbeitet wird.

2. Verfahren nach Anspruch 1, wobei eine Bewegungsrichtung des Indikators von der Bewegungsrichtung der Berührung, die mit dem zweiten Bereich assoziiert ist, abhängt.

3. Verfahren nach einem der Ansprüche 1 oder 2, umfassend das Auswählen von zumindest einiger der Information in Reaktion auf das Erkennen der Bewegung der Berührung im zweiten Bereich.

4. Verfahren nach Anspruch 3, wobei die zumindest einige der Information von der Bewegungsrichtung abhängt.

5. Verfahren nach einem der Ansprüche 1 bis 4, wobei der Indikator zumindest eines von einem Cursor und einer Markierung umfasst.

6. Verfahren nach einem der Ansprüche 1 bis 5, wobei die Information alphanumerische Zeichen umfasst.

7. Verfahren nach einem der Ansprüche 1 bis 6, wobei die Steuerung benachbart zur Information angezeigt wird.

8. Verfahren nach einem der Ansprüche 1 bis 7, wobei der Bereich der berührungsempfindlichen Anzeige (118), in dem die Information angezeigt wird, zur Unterbringung der Anzeige der Steuerung begrenzt ist.

9. Verfahren nach einem der Ansprüche 1 bis 8, wobei die Steuerung zumindest einen Teil einer virtuellen Tastatur ersetzt.

10. Verfahren nach einem der Ansprüche 1 bis 9, wobei das Anzeigen einer Steuerung Anzeigen einer ersten Steuerung und Anzeigen einer zweiten Steuerung umfasst.

11. Verfahren nach einem der Ansprüche 1 bis 9, wobei das Anzeigen einer Steuerung Anzeigen einer horizontalen Steuerung zum Steuern von horizontaler Bewegung des Indikators und Anzeigen einer vertikalen Steuerung zum Steuern von vertikaler Bewegung des Indikators umfasst.

12. Maschinenlesbares Medium mit maschinenlesbarem Code, der durch zumindest einen Prozessor einer elektronischen Vorrichtung zum Ausführen des Verfahrens nach einem der Ansprüche 1 bis 11 ausführbar ist.

13. Elektronische Vorrichtung (100), umfassend:
eine berührungsempfindliche Anzeige (118), die zum Anzeigen von Information in einem ersten Bereich (302) konfiguriert ist;
einen Prozessor, der betriebsfähig an die berührungsempfindliche Anzeige gekoppelt ist, zum Erkennen des Aufrufs einer Steuerung, Anzeigen der Steuerung in einem zweiten Bereich der berührungsempfindlichen Anzeige, ohne die angezeigte Information im ersten Bereich (302) zu überdecken oder zu verschieben, Erkennen einer Berührung, die mit dem zweiten Bereich assoziiert ist, Erkennen einer Bewegung der Berührung, die mit dem zweiten Bereich assoziiert ist, und in Reaktion auf das Erkennen der Bewegung der Berührung, Bewegen eines Indikators innerhalb der angezeigten Information basierend auf einem von einem Mehrfachen oder einem Bruchteil einer Distanz, über die die Berührung bewegt wird, zum Steuern des Indikators innerhalb der Information, **dadurch gekennzeichnet, dass**;
der Prozessor ferner zu Folgendem konfiguriert ist:
Anzeigen, im zweiten Bereich der berührungsempfindlichen Anzeige, von auswählbaren Bearbeitungsmerkmalen, die mit dem Bearbeiten der angezeigten Information assoziiert sind; und
wenn die Auswahl eines auswählbaren Bearbeitungsmerkmals erkannt wird, Ausführen (218) einer entsprechenden Bearbeitungsfunktion zum entsprechenden Bearbeiten der angezeigten Information.

## Revendications

1. Procédé comprenant les étapes consistant à :
afficher des informations dans une première zone d'un afficheur tactile (118) d'un dispositif électronique (100) ;
détecter l'invocation d'un contrôleur ;
afficher le contrôleur dans une seconde zone de l'afficheur tactile (118) sans recouvrir ou déplacer les informations affichées dans la première zone (302) ;
détecter un toucher associé à la seconde zone ;
détecter un mouvement du toucher associé à la seconde zone ; et
en réponse à la détection du mouvement du toucher, bouger un indicateur à l'intérieur des informations dans une direction correspondante sur la base de l'un d'un multiple et d'une fraction d'une distance dont le toucher est bougé pour commander l'indicateur à l'intérieur des informations ; **caractérisé en ce que** ;
le procédé comprenant en outre l'étape consistant à afficher, dans la seconde zone de l'afficheur tactile, des caractéristiques d'édition sélectionnables associées à l'édition des informations affichées ;
dans lequel, lorsque la sélection d'une caractéristique d'édition sélectionnable est détectée, une fonction d'édition correspondante est réalisée (218) et les informations affichées sont éditées en conséquence.

2. Procédé selon la revendication 1, dans lequel une direction de mouvement d'un indicateur est dépendante de la direction de mouvement du toucher associé à la seconde zone.

3. Procédé selon l'une quelconque des revendications 1 ou 2, comprenant l'étape consistant à sélectionner au moins certaines des informations en réponse à la détection d'un mouvement du toucher sur la seconde zone.

4. Procédé selon la revendication 3, dans lequel les au moins certaines des informations sont dépendantes de la direction de mouvement.

5. Procédé selon l'une quelconque des revendications 1 à 4, dans lequel l'indicateur comprend au moins l'un d'un curseur et d'une mise en surbrillance.

6. Procédé selon l'une quelconque des revendications 1 à 5, dans lequel les informations comprennent des caractères alphanumériques.

7. Procédé selon l'une quelconque des revendications 1 à 6, dans lequel le contrôleur est affiché de manière adjacente aux informations.

8. Procédé selon l'une quelconque des revendications 1 à 7, dans lequel la zone de l'afficheur tactile (118) où les informations sont affichées est limitée pour permettre l'affichage du contrôleur.

9. Procédé selon l'une quelconque des revendications 1 à 8, dans lequel le contrôleur remplace au moins une partie d'un clavier virtuel.

10. Procédé selon l'une quelconque des revendications 1 à 9, dans lequel l'étape d'affichage d'un contrôleur consiste à afficher un premier contrôleur et à afficher un second contrôleur.

11. Procédé selon l'une quelconque des revendications 1 à 9, dans lequel l'étape d'affichage d'un contrôleur consiste à afficher un contrôleur horizontal pour commander un mouvement horizontal de l'indicateur et à afficher un contrôleur vertical pour commander un mouvement vertical de l'indicateur.

12. Support lisible par ordinateur ayant un code lisible par ordinateur exécutable par au moins un processeur d'un dispositif électronique pour réaliser le procédé selon l'une quelconque des revendications 1 à 11.

13. Dispositif électronique (100) comprenant :
un afficheur tactile (118) configuré pour afficher des informations dans une première zone (302) ;
un processeur couplé de manière fonctionnelle à l'afficheur tactile pour détecter l'invocation d'un contrôleur, afficher le contrôleur dans une seconde zone de l'afficheur tactile sans recouvrir ou déplacer les informations affichées dans la première zone (302), détecter un toucher associé à la seconde zone, détecter un mouvement du toucher associé à la seconde zone, et en réponse à la détection du mouvement du toucher, bouger un indicateur à l'intérieur des informations sur la base de l'un d'un multiple et d'une fraction d'une distance dont le toucher est bougé pour commander l'indicateur à l'intérieur des informations, **caractérisé en ce que** ;
le processeur étant en outre configuré pour :
afficher, dans la seconde zone de l'afficheur tactile, des caractéristiques d'édition sélectionnables associées à l'édition des informations affichées ; et
lorsque la sélection d'une caractéristique d'édition sélectionnable est détectée, réaliser (218) une fonction d'édition correspondante pour éditer les informations affichées en conséquence.
